# EUROPÄISCHE PATENTANMELDUNG

(11) **EP 1 003 106 A2**
(43) Veröffentlichungstag der Anmeldung: **24.05.2000**
(21) Anmeldenummer: 99120665.7
(22) Anmeldetag: 19.10.1999
(51) Int. Cl.: G06F 13/10, G06F 9/46, B60R 16/02

(54) **Anordnung zur Anpassung von Betriebsdaten und/oder Betriebsprogrammen**

(30) Priorität: 29.10.1998 DE 19849810
(71) Anmelder: Mannesmann VDO Aktiengesellschaft, 60388 Frankfurt am Main (DE)
(72) Erfinder: Watzal, Matthias, 65321 Heidenrod (DE); Höck, Dietmar, 61381 Friedrichsdorf (DE)
(74) Vertreter: Rassler, Andrea, Dipl.-Phys.

(57) **Zusammenfassung**

Die Erfindung betrifft eine Anordnung zur Anpassung von Daten und/oder Programmen zwischen zwei elektronischen Einrichtungen, welche unterschiedliche elektronische Konfigurationen aufweisen. Bei einer Einrichtung, welche die Übertragung von Daten an Steuergeräte mit unterschiedlicher elektronischer Architektur vereinfacht, ist eine Recheneinheit (1) mit mehreren Schnittstellen (8, 9, 10, 11, 12, 24, 47) verbunden, wobei jede Schnittstelle (8, 9, 10, 11, 12, 24, 46) eine unveränderliche oder eine frei programmierbare Konfiguration aufweist und die erste elektronische Einrichtung (21, 30) an eine erste ausgewählte Schnittstelle (8, 9) und die zweite elektronische Einrichtung (22, 34) an eine zweite, ihrer elektronischen Konfiguration entsprechenden Schnittstelle (10, 11, 12, 24, 47) angeschlossen ist, wobei die Recheneinheit (1) nach Erhalt eines Steuerbefehls eines von mehreren in einem Speicher (3) abgelegten Anpassungsprogrammen aktiviert, welches die über die erste ausgewählte Schnittstelle (8, 9) eingegebenen Daten und/oder Programme zur Ausgabe über die zweite ausgewählte Schnittstelle (10, 11, 12, 24, 47) anpaßt.

## Beschreibung

Die Erfindung betrifft eine Anordnung zur Anpassung von Daten und/oder Programmen zwischen zwei elektronischen Einrichtungen, welche unterschiedliche elektronische Konfigurationen aufweisen.

Im Kraftfahrzeug werden Steuergeräte für viele verschiedene Steuer- und Regelungsabläufe angewendet. Kraftfahrzeugtechnische Anwendungen sind beispielsweise die Regelung der Einspritzmenge, ABS, Leerlaufregelung oder Abstands- und Geschwindigkeitsregelung. Die im Festwertspeicher des Steuergerätes gespeicherten erforderlichen Betriebsprogramme und die zugehörigen Parameter müssen im Laufe der Lebensdauer eines Steuergerätes angepaßt werden. Dies macht eine Übertragung von neuen Daten und Programmen in den Speicher des Steuergerätes notwendig.

Da die Datenübertragung innerhalb des Kraftfahrzeuges von Fahrzeug zu Fahrzeug verschieden ist, weisen die einzelnen Steuergeräte unterschiedliche elektrische Konfigurationen auf. So gibt es eine Gruppe von Steuergeräten, welche Daten über serielle Verbindungen übertragen, bei anderen Steuergeräten werden die Daten über Bussysteme weitergegeben.

Zur Übertragung von neuen Daten oder Programmen in ein Steuergerät müssen diese den jeweiligen Übertragungsmöglichkeiten des einzelnen Steuergerätes angepaßt werden. Das bedeutet, daß für jedes Steuergerät extra eine softwaremäßige Anpassung erfolgen muß. Dies ist mit einem großen entwicklungstechnischen Aufwand verbunden.

Der Erfindung liegt somit die Aufgabe zugrunde, die Übertragung von Daten an Steuergeräte mit unterschiedlichster elektronischer Architektur zu vereinfachen.

Erfindungsgemäß wird die Aufgabe dadurch gelöst, daß eine Recheneinheit mit mehrere Schnittstellen verbunden ist, wobei jede Schnittstelle eine unveränderliche oder eine frei programmierbare Konfiguration aufweist und die erste elektronische Einrichtung an eine erste ausgewählte Schnittstelle und die zweite elektronische Einrichtung an eine zweite, ihrer elektronischen Konfiguration entsprechenden Schnittstelle angeschlossen ist, wobei die Recheneinheit nach Erhalt eines Steuerbefehls eines von mehreren in einem Speicher abgelegten Anpassungsprogrammen aktiviert, welches die über die erste ausgewählte Schnittstelle eingegebenen Daten und/oder Programme zur Ausgabe über die zweite Schnittstelle anpaßt.

Der Vorteil der Erfindung besteht darin, daß aufgrund dieser Einrichtung das neue Betriebsprogramm mit Hilfe einer beliebigen elektronischen Einrichtung erstellt werden kann. Nach abgeschlossenen Arbeiten wird das fertige Programm in das gewünschte Steuergerät übertragen. Aufgrund von unterschiedlichen vorhandenen Schnittstellen ist die Einrichtung frei konfigurierbar. Das hat den Vorteil, daß in Abhängigkeit von der Architektur des zu programmierenden Steuergerätes nicht extra für jedes Steuergerät eine Anpassungsschaltung erstellt werden muß, sondern durch einfache softwaremäßige Verknüpfungen innerhalb der erfindungsgemäßen Einrichtung für jedes Steuergerät die richtige Anpassung einfach erstellt werden kann. Die erfindungsgemäße Einrichtung übernimmt dabei die Funktion eines Adapters, welcher Steuergeräte jeglicher Art frei koppelt.

In einer Weiterbildung speichert die Recheneinheit die von der ersten elektronischen Einrichtung über die erste ausgewählte Schnittstelle übertragenen Daten und/oder Programme in einem Festwertspeicher zwischen. Damit wird sichergestellt, daß die Übertragung in die Recheneinheit fehlerlos erfolgt, bevor die eigentliche Anpassung der Daten erfolgt.

Zur freien Konfigurierbarkeit ist die Recheneinheit zur Ausgabe der Daten und/oder Programme mit einer seriellen Schnittstelle, einem Pegelwandler und/oder einer Busschnittstelle verbunden, während zur Dateneingabe eine serielle und eine parallel Schnittstelle vorhanden ist.

Wenn es die Busarchitektur erfordert, ist bei Aktivierung der Busschnittstelle durch die Recheneinheit ein Bus-Abschlußwiderstand schaltbar. So wird in einfacher Art und Weise die Datenausgabe über eine Busschnittstelle unterstützt.

Je nachdem, welche Schnittstelle aktiviert ist, wird eine die Schnittstelle kennzeichnende Anzeigeeinrichtung durch die Recheneinheit angesteuert. Somit ist es für den Bediener der Einrichtung jederzeit nachvollziehbar, ob die richtige elektronische Konfiguration eingestellt wurde.

In einer besonders einfachen Art und Weise ist eine der beiden elektronischen Einrichtungen über die Recheneinheit mit einer Versorgungsspannung verbindbar, indem über eine softwaremäßige Steuerung die an der Recheneinheit anliegende Versorgungsspannung an eine Spannungsübertragungseinrichtung geschaltet wird, an welche die zu versorgenden elektronische Einrichtung angeschlossen ist.

Zur Übertragung von Betriebsprogrammen ist die erste elektronische Einrichtung an eine parallele, mit der Recheneinheit verbundenen Schnittstelle, z. B. eines PC's, angeschlossen, während die zweite elektronische Einrichtung über eine Diagnoseschnittstelle mit der Recheneinheit verbunden ist. Dabei wird der Recheneinheit der zweiten elektronischen Einrichtung über die Diagnoseschnittstelle ein Signal zur Umschaltung der zweiten elektronischen Einrichtung vom Betriebsmode in den Programmiermode zugeführt. Der Vorteil besteht darin, daß durch Nutzung der Recheneinheit der zweiten elektronischen Einrichtung eine Information in der zweiten elektronischen Einrichtung speicherbar ist, die sofort beim Einschalten der zweiten elektronischen Einrichtung erkannt und zur Umschaltung der elektronischen Einrichtung in den Programmiermodus genutzt wird.

Dabei wird das Signal zur Umschaltung der zweiten elektronischen Einrichtung in den Programmiermode durch die Recheneinheit in den, mindestens ein Betriebsprogramm der zweiten elektronischen Einrichtung speichernden Festwertspeicher übertragen, wobei die Umschaltinformation durch die Recheneinheit der zweiten elektronischen Einrichtung im Festwertspeicher gelesen wird und nach dem Lesen der Umschaltinformation das Steuergerät in den Programmiermodus umgeschaltet wird.

Nach Einstellen des Programmiermodes wird ein neues Betriebsprogramm für die zweite elektronische Einrichtung zunächst in einen Arbeitsspeicher der Recheneinheit der zweiten elektronischen Einrichtung übertragen und nach Löschung der Speicherplätze im Festwertspeicher durch die Recheneinheit der zweiten elektronischen Einrichtung, wird das neue Betriebsprogramm in den Festwertspeicher übertragen.

Vorteilhafterweise erfolgt die Verwaltung von Benutzerzugriffsrechten verschiedener Benutzergruppen auf das Steuergerät über Codierungen, welche im NV -RAM der Recheneinheit abgelegt sind.

Die Erfindung läßt zahlreiche Ausführungsformen zu. Eine davon soll anhand in der Zeichnung dargestellten Figuren näher erläutert werden.

Es zeigen:
- Figur 1:: erfindungsgemäße Anpassungsschaltung
- Figur 2:: Programmiereinrichtung
- Figur 3:: Prüfeinrichtung zur Funktionsweise einer Abstandsregeleinrichtung

Gleiche Merkmale sind mit gleichen Bezugszeichen gekennzeichnet.

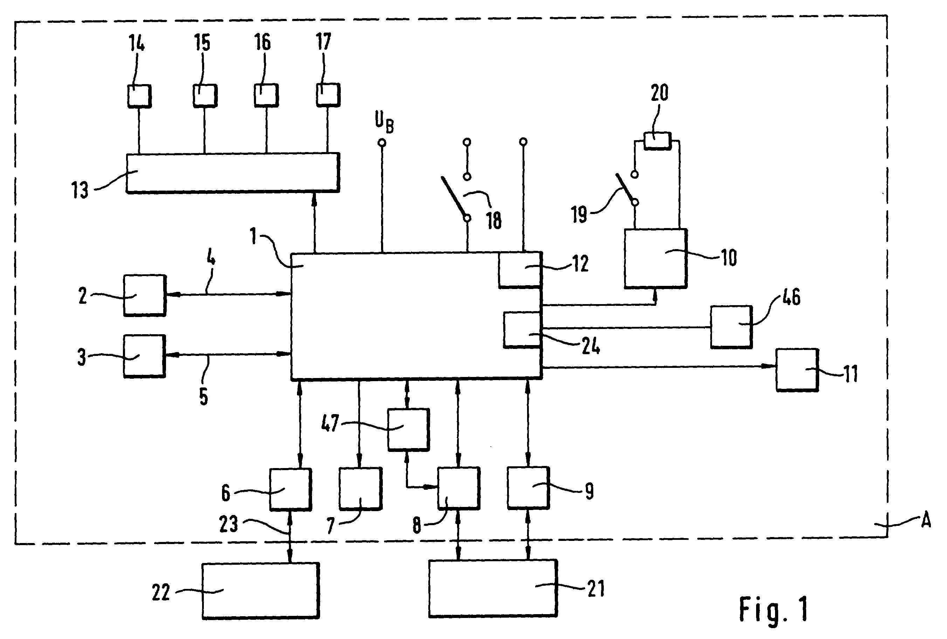

In Figur 1 ist die erfindungsgemäße Anpassungseinrichtung A für Steuergeräte mit beliebiger Konfiguration dargestellt, wie sie für Kraftfahrzeuge Einsatz findet. Kern dieser Anpassungsschaltung ist ein Mikroprozessor 1, welcher über die bidirektionalen Datenleitungen 4 und 5 mit je einem Arbeitsspeicher 2 und einem Festwertspeicher 3 verbunden ist. Der Festwertspeicher 3 ist dabei in Form eines Flashspeichers ausgebildet.

Die Anpassungsschaltung A weist darüber hinaus eine Vielzahl von Schnittstellen auf, mittels denen der Mikroprozessor 1 in der Lage ist mit externen Einrichtungen zu kommunizieren. Neben den schon genannten Steuergeräten eines Kraftfahrzeuges ist eine solch externe Einrichtung unter anderem ein PC 21.

Zu den erwähnten Schnittstellen zählen eine Diagnoseschnittstelle 6, eine Versorgungsspannungsübertragungseinrichtung 7, eine serielle PC-Schnittstelle 8, eine parallele PC-Schnittstelle 9 sowie eine Busschnittstelle 10. Darüber hinaus ist der Mikroprozessor 1 mit einer serielle Datenausgabeschnittstelle 11 verbunden. Darüber hinaus ist ein frei programmierbarer Port 24 des Mikroprozessors 1 zur Nachbildung beliebiger Schnittstellen vorhanden, welcher mit einer Treiberbeschaltung 46 verbunden ist.

Eine serielle Verbindung zu dem extern anzuschließenden Steuergerät kann auch über einen Pegelwandler 47 hergestellt werden, welcher entweder über den Mikroprozessor 1 oder direkt über die serielle Schnittstelle 8 betrieben wird.

Es ist weiterhin die Möglichkeit vorgesehen, über einen Anschluß externe Einrichtungen, wie z. B. Sensoren an den in dem Mikroprozessor 1 enthaltenen A/D-Wandler 12 anzuschließen. Der Mikroprozessor 1 wird einerseits von einer Betriebsspannung U_{B} versorgt und ist andererseits an Masse angeschlossen.

Darüber hinaus ist ein Lampentreiber 13 mit dem Mikroprozessor 1 verbunden, welcher Anzeigeeinrichtung 14 bis 17 gemäß den Steuersignalen des Mikroprozessors 1 ansteuert. Ein Schalter 18 ist zum Ein- bzw. Ausschalten des Anpassungsgerätes vorgesehen. Die Busschnittstelle 10 ist insbesondere für die Anschluß des in Kraftfahrzeugen üblichen CAN-Busses ausgebildet, wobei über einen Schalter 19, welcher an der Busschnittstelle 10 angeordnet ist, ein Widerstand 20 als Busabschlußwiderstand bei Aktivierung der Busschnittstelle 10 geschaltet werden kann.

Die beschriebenen Anpassungsschaltung kann eine Vielzahl von Funktionen z. B. zwischen einem PC und einem Steuergerät eines Kraftfahrzeuges übernehmen.

Sollen die vom PC 21 an das Steuergerät 22 übertragenen Daten nur hinsichtlich ihres Signalpegels verändert werden, arbeitet der Mikroprozessor 1 als Pegelumsetzer. Dabei wird an die , mit dem Mikroprozessor 1 verbundene serielle PC-Schnittstelle 8 der PC 21 angeschlossen, wobei eine Diagnoseleitung 23 des Steuergerätes 22 an die Diagnoseschnittstelle 6 angeschlossen ist, die ebenfalls mit dem Mikroprozessor 1 verknüpft ist.

Alternativ dazu ist die serielle Schnittstelle 8 direkt an den Pegelumsetzer 47 angeschlossen. In diesem Fall arbeitet die Anpassungsschaltung ohne den Mikroprozessor 1.

Soll die Anpassungseinrichtung zur Anpassung der vom PC erstellten Daten an den Datenbus des Kraftfahrzeuges dienen, wird die parallele Schnittstelle des PC 21 an die parallele, mit dem Mikroprozessor 1 verbundene Eingangsschnittstelle 9 angeschlossen. Die nicht weiter dargestellten Bus-Leitungen des Steuergerätes 22 werden dabei an die CAN-Bus-Schnittstelle 10 geführt, wobei durch den Schalter 19 der CAN-Bus-Abschlußwiderstand 20 aktiviert wird. Der Einsatz eines solchen Bus-Abschlußwiderstandes 20 ist von der Architektur des Netzwerkes abhängig, an welchen das Steuergerät angeschlossen ist.

Zur Verwendung der Anpassungseinrichtung als Diagnose-Umsetzer wird die parallele Schnittstelle des PC's 21 ebenfalls an die parallele Eingangsschnittstelle 9 der Anpassungsschaltung angeschlossen, wobei die Diagnoseleitung 23 des Steuergerätes 22 an die mit dem Mikroprozessor 1 verknüpfte Diagnoseschnittstelle 6 angeschlossen wird.

Ist einer der dargestellten Fälle eingerichtet, steuert der Mikroprozessor 1 über den Lampentreiber 13 eine der Anzeigeeinrichtungen 14 bis 17 an, welche repräsentativ für den eingestellten Zustand ist.

Zusätzlich zu den beschriebenen fest konfigurierten Schnittstellen ist eine frei programmierbare Schnittstelle 24 vorhanden. Dabei werden nichtbelegte Ein- und Ausgänge des Mikroprozessors 1 zur Nachbildung beliebiger Schnittstellen softwaremäßig konfiguriert. So können wahlweise eine serielle oder eine parallele Schnittstelle programmiert werden.

Um sicherzustellen, daß nur autorisierte Personen diese Einrichtung zur Programmierung von Steuergeräten nutzen können, werden in dem als Flashspeicher ausgebildeten Festwertspeicher 3 Nutzer und Seriennummer des Steuergerätes und eine Codierung der Anpassungseinrichtung abgelegt. Einem Betreiber der Schaltungsanordnung wird erst nach Eingabe und Verifizierung der genannten Daten eine Nutzung der erfindungsgemäßen Einrichtung erlaubt. Mit Hilfe dieser Codierung werden verschiedenen Nutzern unterschiedliche Zugriffsrechte gewährt.

Die erläuterte Anpassungseinrichtung ist vielseitig verwendbar, so können durch Befehle, welche vom PC 21 an die Anpassungseinrichtung übermittelt werden, der CAN-Bus über die Busschnittstelle 10 getestet werden. Weiterhin können CAN-Busteilnehmer simuliert werden.

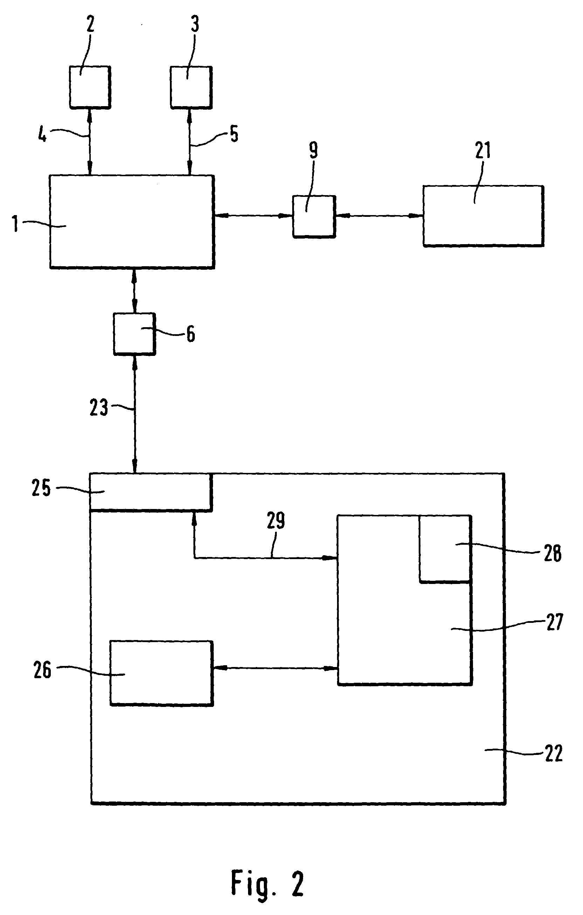

In Figur 2 ist dargestellt, wie die Neuprogrammierung des Steuergerätes 22 erfolgt. Dabei ist die parallele Schnittstelle des PC's 21 an die parallele, mit dem Mikroprozessor verbundene Schnittstelle 9 angeschlossen. Die mit dem Mikropozessor 1 verbundene Diagnoseschnittstelle 6 ist mit einer Diagnoseschnittstelle 25 des Steuergerätes 22 über die Diagnoseleitung 23 verbunden. Darüber hinaus führt die Diagnoseschnittstelle 25 des Steuergerätes 22 über eine bidirektionale Datenleitung 29 auf eine Recheneinheit 27 des Steuergerätes 22.

Bei der Übertragung von neuen Betriebsprogrammen wird der Mikroprozessor 1 wie ein Steuergerät behandelt, dabei werden von dem PC 21 in den Mikroprozessor 1 neue Daten über die parallele Schnittstelle 9 eingegeben. Der Mikrorechner 1 aktiviert ein Konfigurationsprogramm, welches die in das Steuergerät 22 zu übertragenen Daten so formatiert, das sie von dem Steuergerät 22 verarbeitet werden können.

Über den Mikroprozessor 1 wird ein Diagnosebefehl an die Recheneinheit 27 des Steuergerätes 22 gesendet, wodurch die Recheneinheit 27 die Information erhält, daß ein neues Betriebsprogramm in dem Flashspeicher 26 des Steuergerätes 22 eingelesen werden soll. Daraufhin aktiviert die Recheneinheit 27 eine in ihrem Arbeitsspeicher 28 abgelegte Programmladeroutine. Das neue Betriebsprogramm wird zunächst in den Arbeitsspeicher 28 übertragen, wobei gleichzeitig die benötigten Speicherplätze im Festwertspeicher 26 gelöscht werden. Auf die beschriebene Art und Weise kann auch der Mikroprozessor 1 selbst neu programmiert werden.

Darüber hinaus existiert ein Modus, in welchem die Programmladeroutine vom Mikroprozessor 1 an das Steuergerät 27 gesendet wird und dann zur Ausführung kommt. Zu diesem Zweck wird die Recheneinheit 27 des Steuergerätes 22 durch den Mikroprozessor 1 in den boud strap versetzt.

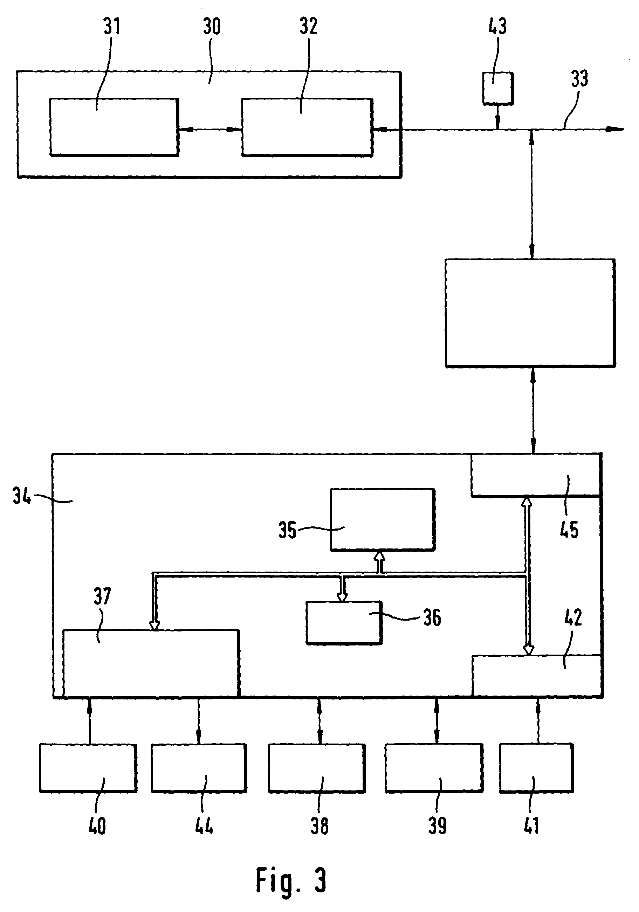

Mit Hilfe von Figur 3 soll die erfindungsgemäße Anpassungseinrichtung an eine Einrichtung zur Prüfung der Funktionsweise einer Abstandsregeleinrichtung eines Kraftfahrzeuges erläutert werden. Die automatische Geschwindigkeits- und Abstandsregeleinrichtung 30 bildet dabei eine bauliche Einheit zwischen einem Radarsensor 31 und dem Abstandsregelgerät 32. Der Sensor 31 sendet z. B. alle 5 Millisekunden in Fahrtrichtung des Fahrzeuges Signale aus, welche von den Fahrzeugen, die sich im Signalstrahl befinden, reflektiert werden. Aus diesen zurückgesendeten Signalen wird von einer im Sensor 31 integrierten Signalaufbereitungsschaltung, der Abstand und die Relativgeschwindigkeit der vorausfahrenden Fahrzeuge bestimmt. Diese Meßergebnisse werden von der Abstandsregeleinrichtung 32 ausgewertet, welche an das Bussystem 33 des Kraftfahrzeuges angeschlossen ist. Die Anpassungsschaltung A ist ebenfalls mit dem Bussystem 33 und über eine Parallelschnittstelle 45 mit einer Datenvergleichseinrichtung 34 verbunden. Diese Datenvergleichseinrichtung 34 besteht aus einer weiteren Recheneinheit 35, die mit einem als Wechselfestplatte ausgebildeten Festwertspeicher 36 verbunden ist. Innerhalb der Datenvergleichseinrichtung 34 erfolgt der Datenaustausch bidirektional, wobei die Recheneinheit 35 mit einer Bildauswerteeinheit 37 verbunden ist, welche im konkreten Fall eine Videograbberkarte ist. Über Bedienelemente, wie z. B. eine Tastatur 38 oder eine Maus 39, ist die Datenvergleichseinrichtung 34 steuerbar. So wird mit Hilfe der Bedienelemente 38, 39 die Datenvergleichseinrichtung 34 entweder in den Meßbetrieb oder den Auswertebetrieb eingestellt. Die Bildauswerteeinrichtung 37 ist mit einer Videokamera 40 verbunden, die Videobilder an die Auswerteeinrichtung 37 liefert, welche die tatsächliche Verkehrssituation in Fahrtrichtung des Fahrzeuges wiedergeben. Mittels eines Tasters 41, welcher ebenfalls über eine parallele Schnittstelle 42 mit der Recheneinheit 35 verbunden ist, werden Auslöseimpulse zur Speicherung der digitalisierten Daten auf der Wechselfestplatte 36 eingegeben.

Pro Zeiteinheit werden Objektdaten (Abstand, Relativgeschwindigkeit und regelspezifische Daten) ermittelt, aus denen die Abstandsregeleinrichtung 32 den voraussichtlichen Fahrkorridor des Regelobjektes bestimmt. Über den CAN-Bus 33 werden die von der Abstandsregeleinrichtung 32 kommenden Daten in die Datenvergleichseinrichtung 34 eingelesen. Außerdem werden über den CAN-Bus 33 Fahrzeugmeßwerte übertragen, die von Sensoren 43 ermittelt werden und die den Zustand des Fahrzeuges beschreiben. Die Datenanpassungseinrichtung A dient als Adapter für die über den CAN-Bus 33 des Fahrzeuges übertragenen Daten. Mit Hilfe eines in ihr angeordneten Buskonfigurationsprogrammes, werden die gelieferten Daten so umgesetzt, daß die Datenvergleichseinrichtung 34 sie verarbeiten kann.

Zusätzlich kann die Auswahl der Daten, die über den CAN-Bus 33 übertragen werden, im Mikroprozessor 1 konfiguriert werden.

Die verarbeiteten Daten werden mit den aus dem Videobild gewonnenen und digitalisierten Daten verglichen. Auf Grund des Vergleiches wird die Funktionsweise der Abstandsregeleinrichtung 30 überprüft.

### Bezugszeichen

- 1: Mikroprozessor
- 2: Arbeitsspeicher
- 3: Festwertspeicher
- 4: Bidirektionale Datenleitung
- 5: Bidirektionale Datenleitung
- 6: Diagnoseschnittstelle
- 7: Spannungsübertragungseinrichtung
- 8: Serielle Schnittstelle
- 9: Parallele Schnittstelle
- 10: Busschnittstelle
- 11: Serielle Schnittstelle
- 12: A/D-Wandler
- 13: Lampentreiber
- 14: Anzeigeeinrichtung
- 15: Anzeigeeinrichtung
- 16: Anzeigeeinrichtung
- 17: Anzeigeeinrichtung
- 18: Schalter
- 19: Schalter
- 20: Busabschlußwiderstand
- 21: PC
- 22: Steuergerät
- 23: Bidirektionale Datenleitung
- 24: Frei programmierbare Schnittstelle
- 25: Diagnoseschnittstelle
- 26: Festwertspeicher
- 27: Recheneinheit
- 28: Arbeitsspeicher
- 29: Bidirektionale Datenleitung
- 30: Abstandsregeleinrichtung
- 31: Radarsensor
- 32: Abstandsregelgerät
- 33: Bussystem
- 34: Datenvergleichseinrichtung
- 35: Recheneinheit
- 36: Wechselfestplatte
- 37: Bildauswerteeinheit
- 38: Tastatur
- 39: Maus
- 40: Videokamera
- 41: Taster
- 42: Parallele Schnittstelle
- 43: Sensor
- 44: Monitor
- 45: Parallel Schnittstelle
- 46: Treiberschaltung
- 47: Pegelwandler

## Patentansprüche

1. Anordnung zur Übertragung von Daten und/oder Programmen zwischen zwei elektronischen Einrichtungen, welche unterschiedliche elektronische Konfigurationen aufweisen dadurch gekennzeichnet, daß eine Recheneinheit (1) mit mehreren Schnittstellen (8, 9, 10, 11, 12, 24, 47) verbunden ist, wobei jede Schnittstelle (8, 9, 10, 11, 12, 24, 47) eine unveränderliche oder eine frei programmierbare Konfiguration aufweist und die erste elektronische Einrichtung (21, 30) an eine erste ausgewählte Schnittstelle (8, 9) und die zweite elektronische Einrichtung (22, 34) an eine zweite, ihrer elektronischen Konfiguration entsprechenden Schnittstelle (10, 11, 12, 24, 47) angeschlossen ist, wobei die Recheneinheit (1) nach Erhalt eines Steuerbefehls eines von mehreren in einem Speicher (3) abgelegten Anpassungsprogrammen aktiviert , welches die über die erste ausgewählte Schnittstelle (8, 9) eingegebenen Daten und/oder Programme zur Ausgabe über die zweite ausgewählte Schnittstelle (10, 11, 12, 24, 47) anpaßt.

2. Anordnung nach Anspruch 1 dadurch gekennzeichnet, daß die Recheneinheit (1) die von der ersten elektronischen Einrichtung (21, 30) über die erste ausgewählte Schnittstelle (8, 9) übertragenen Daten und/oder Programmen in einem Festwertspeicher (3) zwischenspeichert.

3. Anordnung nach Anspruch 1 oder 2 dadurch gekennzeichnet, daß die Recheneinheit (1) zur Ausgabe der Daten und/oder Programmen mit einer seriellen Schnittstelle (11), einem Pegelwandler (47) und/oder einer Busschnittstelle (10) verbunden ist, während zur Dateneingabe eine serielle (8) und/oder parallele Schnittstelle (9) vorhanden ist.

4. Anordnung nach Anspruch 3 dadurch gekennzeichnet, daß bei Aktivierung der Busschnittstelle (10) durch die Recheneinheit (1) ein Bus-Abschlußwiderstand (20) schaltbar ist.

5. Anordnung nach einem der vorhergehenden Ansprüche dadurch gekennzeichnet, daß die Recheneinheit (1) bei Aktivierung einer Schnittstelle (10, 11, 12, 24, 47) eine, diesen Zustand anzeigende Anzeigeeinrichtung (14, 15, 16, 17) ansteuert.

6. Anordnung nach Anspruch 1 dadurch gekennzeichnet, daß eine der beiden elektronischen Einrichtungen (21, 30; 22, 34) gesteuert über die Recheneinheit (1) mit einer Versorgungsspannung (U_{B}) versorgt wird.

7. Anordnung nach Anspruch 6 dadurch gekennzeichnet, daß über eine softwaremäßige Anpassung die an der Recheneinheit (1) anliegenden Versorgungsspannung (U_{B}) an eine Spannungsübertragungseinrichtung (7) geschaltet ist, an welche die zu versorgende elektronische Einrichtung (22, 34) angeschlossen ist.

8. Anordnung nach Anspruch 3 dadurch gekennzeichnet, daß zum Übertragen von Betriebsprogrammen die erste elektronische Einrichtung (21) an die parallele, mit der Recheneinheit (1) verbunden Schnittstelle (9) angeschlossen ist, während die zweite elektronische Einrichtung (22) über eine Diagnoseschnittstelle (6, 25) mit der Recheneinheit (1) verbunden ist.

9. Anordnung nach Anspruch 8 dadurch gekennzeichnet, daß über die Diagnoseschnittstelle (25) der zweiten elektronischen Einrichtung (22) durch die Recheneinheit (1) ein Signal zur Umschaltung der zweiten elektronischen Einrichtung (22) vom Betriebsmode in dem Programmiermode zugeführt wird, wodurch eine Information zur Umschaltung der zweiten elektronischen Einrichtung (22) in einem, ein Betriebsprogramm des Steuergerätes speichernden Festwertspeicher (26) abgelegt ist, welche durch die Recheneinheit (27) der zweiten elektronischen Einrichtung (22) im Festwertspeicher (26) gelesen wird und nach dem Lesen der Umschaltinformation die zweite elektronische Einrichtung (22) von der Recheneinheit (27) in den Programmiermode umgeschaltet wird.

10. Anordnung nach Anspruch 9 dadurch gekennzeichnet, daß zur Umprogrammierung eine Programmladeroutine genutzt wird, welche im Festwertspeicher (26) der zweiten elektronischen Einrichtung (22) gespeichert ist oder über die Diagnoseschnittstelle (25) von der Recheneinheit (1) an die zweite elektronische Einrichtung (22) übertragen wird.

11. Anordnung nach Anspruch 8, 9 und 10 dadurch gekennzeichnet, daß nach Einstellung des Programmiermodes ein neues Betriebsprogramm der zweiten elektronischen Einrichtung (22) zunächst in den Arbeitsspeicher (28) der Recheneinheit (27) der zweiten elektronischen Einrichtung (22) übertragen wird und nach Löschung der Speicherplätze im Festwertspeicher (26) , welche ein vorhergehendes Betriebsprogramm enthalten, anschließend in den Festwertspeicher (26) übertragen wird.

12. Anordnung nach einem der vorhergehenden Ansprüche dadurch gekennzeichnet, daß die Festlegung der Benutzerzugriffsrechte auf die zweite elektronische Einrichtung (22) über in der Recheneinheit (1) abgelegte Codierungen erfolgt.
